# EUROPEAN PATENT SPECIFICATION

(11) **EP 1 429 596 B1**
(45) Date of publication and mention of the grant of the patent: **20.01.2010**
(21) Application number: 02760437.0
(22) Date of filing: 26.09.2002
(51) Int. Cl.: A01D 33/04

(54) **AN AGRICULTURAL SEPARATOR**
LANDWIRTSCHAFTLICHE TRENNVORRICHTUNG
SEPARATEUR DE GRAINS

(30) Priority: 26.09.2001 GB 0123166; 25.02.2002 GB 0204342
(43) Date of publication of application: 23.06.2004
(73) Proprietor: RICHARD PEARSON LIMITED, Boston, Lincolnshire PE22 0JZ (GB)
(72) Inventor: COULAM, John Patrick, c/o Richard, John, Patrick, Boston, Lincolnshire PE22 0JZ (GB)
(74) Representative: Lamb, Richard Andrew
(86) International application number: PCT/GB2002/004392
(87) International publication number: WO 2003/026384

(56) References cited:
- EP-A- 0 673 593
- DE-U- 29 803 880
- GB-A- 2 268 867
- NL-A- 240 720
- US-B1- 6 237 778

## Description

The present invention relates to an agricultural separator.

It is well-known in the agricultural field to use resilient wheels having a plurality of fingers arranged around a hub, commonly known as starwheels, when separating materials, e.g. soil, clod and stones, from root vegetables or bulbs. Starwheels may be made from polyurethane or rubber or any other suitable material. In use, a plurality of starwheels are mounted on a rotatable shaft, commonly known as a "starshaft".

GB 2145 612 discloses two parallel starshafts arranged upstream of a counter-rotating clod roller for use in separating clod and stones from root vegetables or bulbs. In practice, the fingers of the starwheels of adjacent starshafts are staggered and fit into the gaps between the starwheels of the adj acent starshaft. When separating potatoes, potato haulm can become wrapped around the starshafts. However, interleaving the starshafts provides a degree of self-cleaning.

EP 0 899 997 discloses an agricultural separator having a starshaft and a plurality of resilient rings mounted between adjacent starwheels on the starshaft. The resilient rings provide deformability and additional resilient contact between the outer peripheral surface of the rings and material being separated, thereby providing self-cleaning of the starshaft.

However, in the separators described in the above patents damp soil may stick to the starwheels, or hard material may become jammed between the starwheels. This will reduce separation and cause wear on the starwheels and in more extreme conditions block the starwheels and cause two adjacent starshafts to stop rotating.

Furthermore, in EP 0 899 997, the diameter of the ring is such that the distance between the ring and the fingers of the starwheels on adjacent starshafts is negligible, so that any soil which is removed from the ring falls between the fingers of the corresponding starwheel. The soil trapped between the fingers of the starwheels reduces the flexural capability of the fingers, thus impairing their ability to clean and increasing the risk of damage to crop passing over their upper surface.

It is, therefore, an object of the present invention to provide an agricultural separator which overcomes the above disadvantages and provides more satisfactory self-cleaning.

The invention provides an agricultural separator as claimed in Claim 1.

Cam members are preferably mounted between the wheels on the first rotatable member. In a further preferred embodiment wheels with resilient fingers are mounted between the cam members on the second rotatable member. The interaction of the cam members and the wheels on both rotatable members maximises the cleaning efficiency.

In a preferred embodiment of the invention the rotatable members rotate at different speeds. The second rotatable member is preferably rotatable at a higher speed than the first rotatable member to improve cleaning.

In a further preferred embodiment of the invention the or each cam member is made of a resilient material.

The or each cam member is preferably mounted on a rectangular or hexagonal boss.
The position of the projection on each cam member can thus be staggered with respect to the projections on other cam members on the rotatable member. The or each boss is preferably formed integrally with the or each wheel.

In a further preferred embodiment of the invention the cam surface is in the form of a wheel or roller mounted in the region of the periphery of the or each cam member.

In a yet further preferred embodiment, the diameter of the or each cam member is such that a gap is formed between the or each cam member and the or each wheel with which it is adapted to engage to permit passage of material therethrough. Furthermore, the gap prevents direct engagement of the sides of the fingers by the cam member, so that the fingers remain flexural for squeezing by the cam.

The invention will now be described with reference to the accompanying drawings in which;
Figure 1 is a side view of a prior art separator;
Figure 2 is a side part-sectional view of part of a first embodiment of an agricultural separator according to the invention;
Figure 3 is a sectional view along the line A-A in Figure 2;
Figures 4a, 4b and 4c show the operation of the separator of Figure 2;
Figure 5 is a plan view of the part of the agricultural separator of Figure 2;
Figure 6 is a side view of the cam member of the embodiment of Figures 2-5 carrying soil;
Figures 7a, 7b and 7c are side views of alternative embodiments of the agricultural separator according to the invention;
Figures 8a and 8b are side views of further alternative embodiments of the agricultural separator according to the invention, and
Figure 9 is a plan view of part of the embodiment of agricultural separator of Figure 8a.

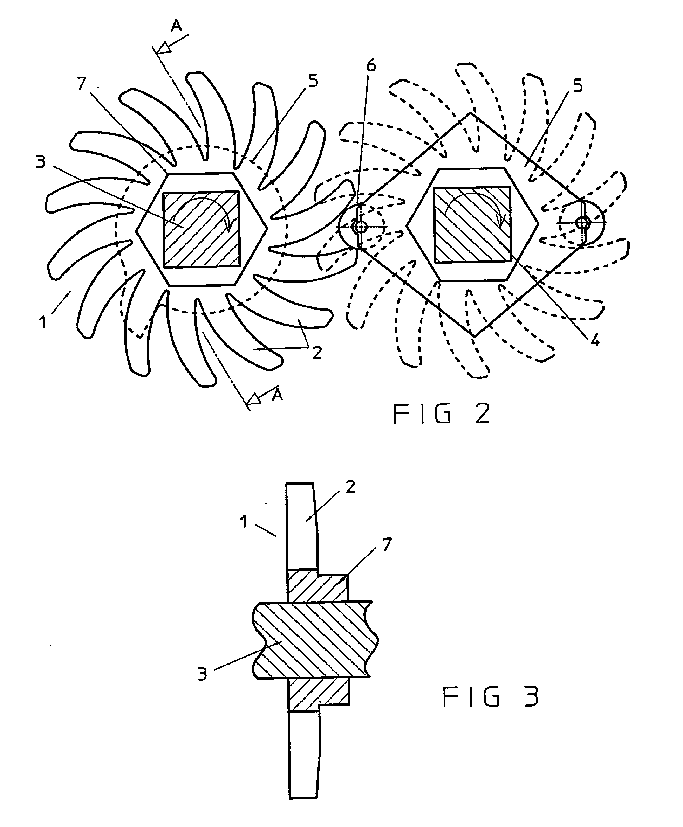

In Figure 2 a wheel 1 having a plurality of angularly-spaced resilient fingers 2 is mounted on a first rotatable member 3. A second rotatable member 4, which also carries a wheel 1, is mounted parallel to and in the same horizontal plane as the first rotatable member 3. The first and second rotatable members 3, 4 rotate in the same direction as one another, i.e. clockwise, as designated by the arrows, and both convey the crop to be separated. A cam member 5 is also mounted on the first and second rotatable member 3, 4, so that each cam member 5 is engageable with the wheel 1 on the opposite rotatable member. Each cam member 5 has a cam surface in the form of a wheel or roller 6 and is mounted on a boss 7. The boss 7 is integral with the adjacent wheel 1 on the same rotatable member. However, the boss 7 may alternatively be integral with the cam member 5 so that the wheel 1 is mountable thereon. As a further alternative, the boss 7 may be made as a separate piece and mounted on the first and second rotatable members 3, 4 respectively. The first and second rotatable members 3, 4 are spaced from one another and arranged so that each roller 6 is engageable with at least some of the fingers 2 of the wheel 1 of the opposite rotatable member 3, 4 as the first and second rotatable members 3, 4 rotate.

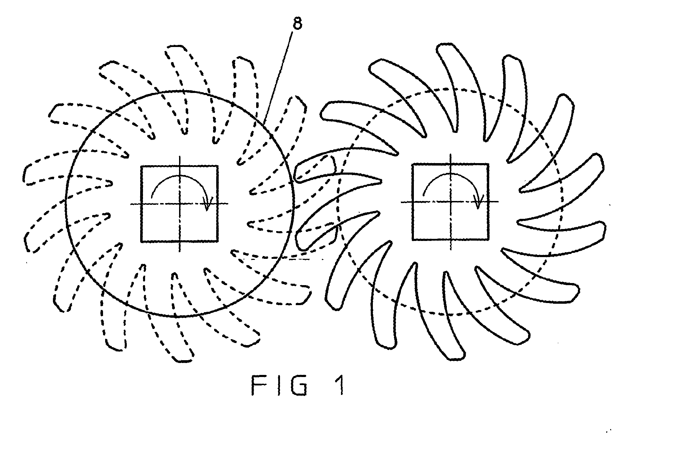

During normal operation of the agricultural separator it is common for soil to become lodged between the fingers 2 of the wheel 1. This is a particular problem when the soil is wet and sticky. As shown in Figure 1, a ring 8 of a conventional separator is of such a diameter that the ring almost touches the fingers 2 of the wheel 1 on the adjacent rotatable member. In contrast, the cam member 5 of Figure 2 has a diameter such that a considerable gap is formed between the cam member 5 and the fingers 2 of the wheel 1. This gap permits soil to fall between the cam member 5 and the fingers 2, thus reducing the amount of soil which is trapped between adjacent fingers 2. Furthermore, it avoids side engagement of the cam member 5 with the adjacent fingers 2, thus maintaining finger flexibility and resilience. In addition, the gap allows the soil to fall off the sides of the fingers 2, thus accelerating discharge of soil from the fingers 2.

The first and second rotatable members 3, 4 are rotatable at different speeds. This ensures that when the roller 6 engages one of the fingers 2 of the wheel 1 on the opposite rotatable member, it subsequently engages the following finger, so that each finger 2 is progressively engaged and squeezed. The cleaning of the fingers 2 is more effective when the cam member 5 moves more quickly than the wheel 1. Since each finger 2 is resilient, there is a springing action as the roller 6 is disengaged from each finger 2. The cam member 5 may also be resilient. Since the roller 6 has a cam surface, passage of the fingers 2 over the roller 6 is smooth. Furthermore, the use of the roller 6 avoids excessive friction between the cam member 5 and the fingers 2, thus reducing wear on the cam member 5 and fingers 2. The roller 6 may be in the form of a sealed ball race. However, a simple roller in the form of a wheel would also be suitable. Such a roller could be made of nylon or any similar hard material. It will be appreciated that the roller 6 can be detached from the cam member 5 for replacement when the roller 6 is worn through use.

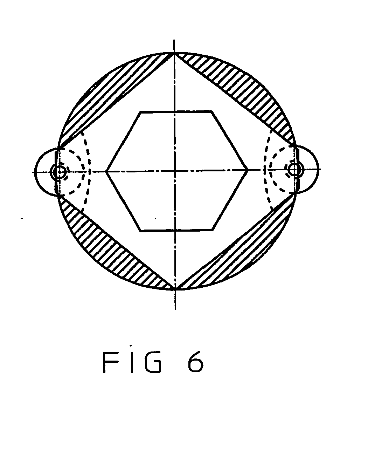

The cam member 5 is diamond-shaped in cross-section. The shaded parts of Figure 6 represent the build-up of soil on the cam member 5 during use. It can be seen that the distribution of soil along each side of the cam member is uneven. This uneven distribution of soil, together with the centrifugal forces acting in the separator, encourage the soil to fall off the cam member 5.

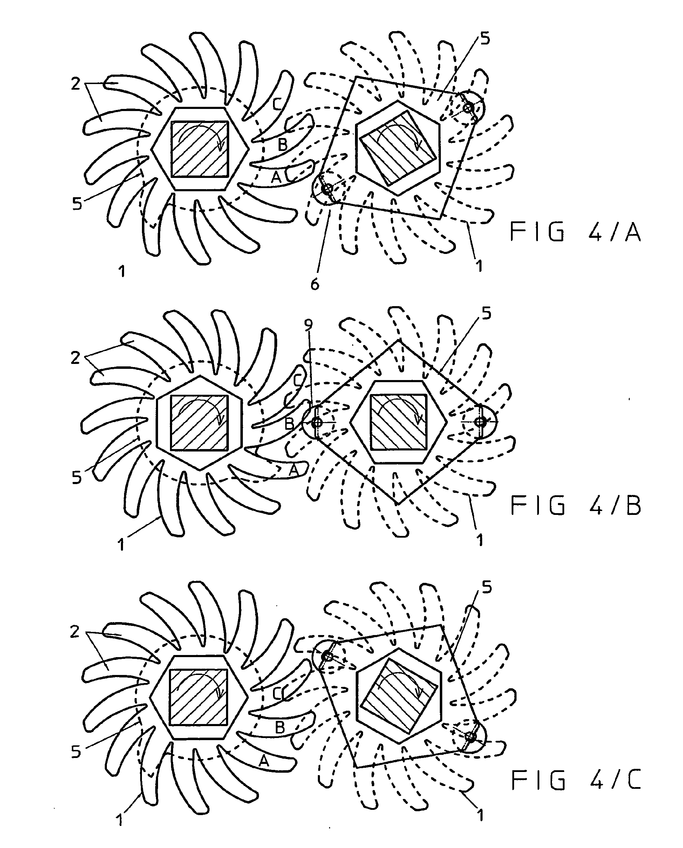

As the cam member 5 and the wheel 1 rotate, the roller 6 on the cam member 5 gradually engages a finger 2a of the wheel 1 (see Figure 4a). The cam member 5 and wheel 1 continue to rotate so that the finger 2a passes further along the roller 6. The finger 2a is subsequently suddenly released from the cam member 5, so that the finger 2a is squeezed and any dirt thereon, together with any dirt between the finger 2a and its adjacent finger 2b, becomes dislodged. The roller 6 then engages finger 2b (see Figure 4b) which undergoes the same process. Similarly, the finger 2c is subsequently engaged (see Figure 4c) and released. Since the roller engages the finger 2b when the projection is approximately level with the central rotational axis of the cam member 5, it will be appreciated that the degree of squeezing of the finger 2b will be somewhat higher than that for the fingers 2a and 2c due to the closer proximity of the finger 2b and roller 6 at that point. In fact, the fingers 2a and 2c merely undergo a flicking action since these fingers are not bent over to such a high degree as the finger 2b.

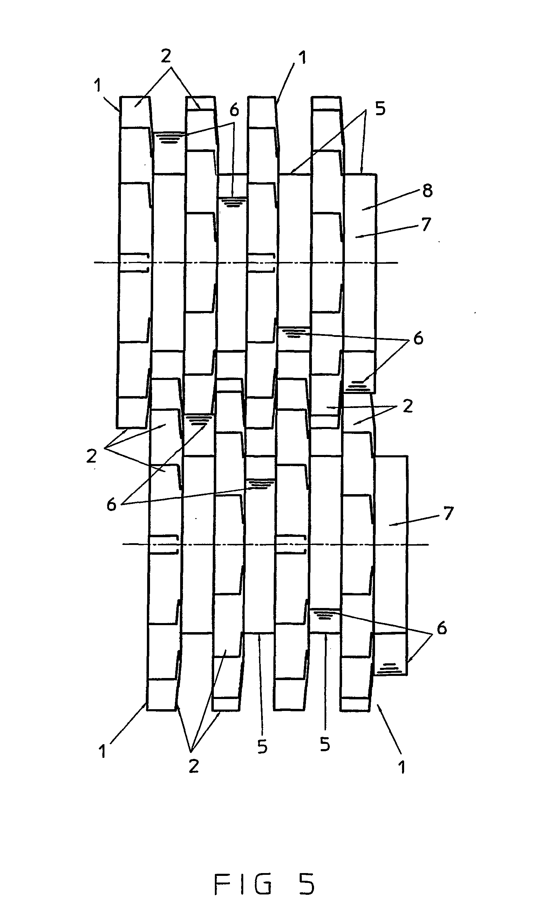

In a preferred embodiment of the invention each rotatable member 3, 4 carries a plurality of cam members 5 and wheels 1 arranged alternately along the respective rotatable members, as shown in Figure 5. Each cam member 5 is arranged so that its roller 6 engages at least one finger 2 of a corresponding wheel 1 on the opposite rotatable member 3,4. The cross-section of the bosses 7 is hexagonal so that the cam members 5 are arranged staggered on the rotatable members 3 and 4, i.e. the roller 6 on each ring 5 is offset from the roller 6 on the next cam member 5 by one side of the hexagon on the respective bosses 7. Alternatively, the bosses 7 could be in the shape of a pentagon, octagon, or any other polygon. However, a polygon having a minimum of four sides, is preferred. Indexing the cam members 5 in this manner allows a more even distribution of mechanical load when driving the rotatable members 3, 4. Furthermore, staggering the cam members 5 facilitates passage of soil removed from the wheels 1 away from the rotatable members 3, 4. In particular, soil which falls off the side of the fingers 2 of one wheel 1 is free to fall downwards because the fingers 2 of the adjacent wheel 1 are engaged with the adjacent cam member 5 at a different circumferential position.

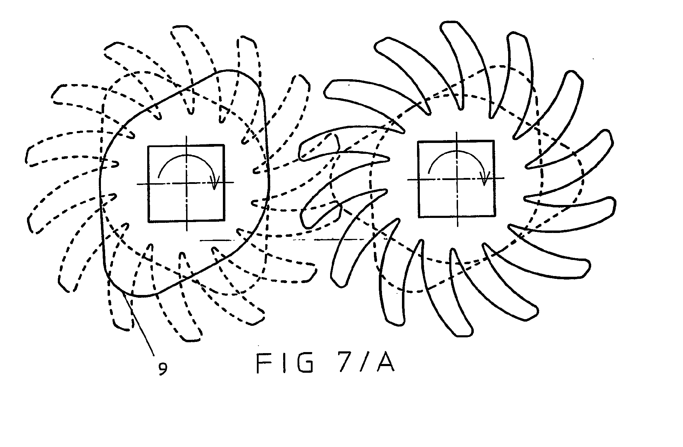

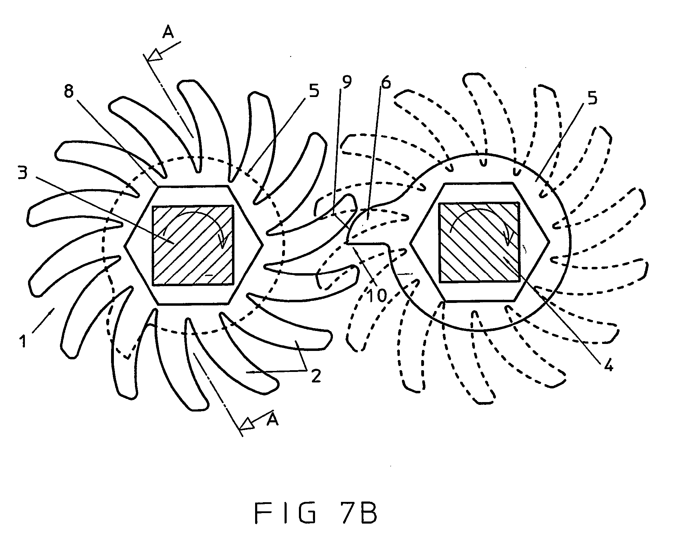

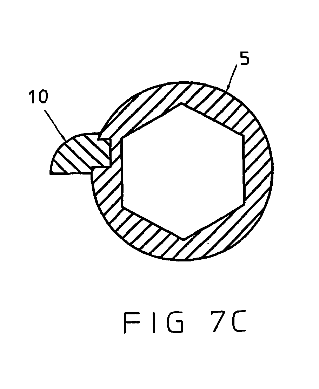

The type of cam member 5 may be varied according to the type of separation being carried out by the separator. For example, the diamond-shaped cam member 5 could be replaced by a cam member 5 having a more rounded cross-section, such as the cam member 5 shown in Figure 7a. Similarly, the cam member 5 having a roller 6 can be replaced by a cam member 5 in the form of a ring having a projection 9 at its periphery, as shown in Figure 7b. Each cam member 5 may have a plurality of peripherally-spaced projections 9 to enhance the cleaning effect of the cam member 5. A further alternative cam member 5 having a detachable projection 9 is shown in Figure 7c. In this embodiment, replacement of the whole cam member 5 is unnecessary when the projection 9 is worn through wear, since a detachable part 10 can simply be removed and replaced.

Alternative wheels can be used in place of the wheel 1 shown in Figures 1-8. For example, wheels having fingers 2 of different length, such as alternate long and short fingers, could be used. Alternatively, wheels having a plurality of straight fingers could be included in the separator. The wheel 1 is selected on the basis of the crop to be separated, soil condition etc.

Furthermore, the mounting of the wheels may be reversed so that the leading edge of the fingers 2 is concave rather than convex.

The wheels 1 may be made of any resilient material, such as polyurethane. Preferably, the cam members 5 are made of any suitable non-resilient material, such as metal, hard plastics or any other suitable hard material. Alternatively, the cam members 5 may be formed from a resilient material, such as rubber or polyurethane.

Although the first and second rotatable members 3, 4 rotate in the same direction in the Figures, it may, under certain operating conditions, be possible or even preferable for the rotatable members to rotate in opposite directions.

In the embodiments of Figures 7b and 7c the mounting of the cam members 5 may be reversed so that the fingers 2 of the wheels 1 first engage the projections 9 at the shoulder 10. In this case, the shoulder 10 should be rounded accordingly to facilitate smooth passage of the fingers 2 over the cam members 5.

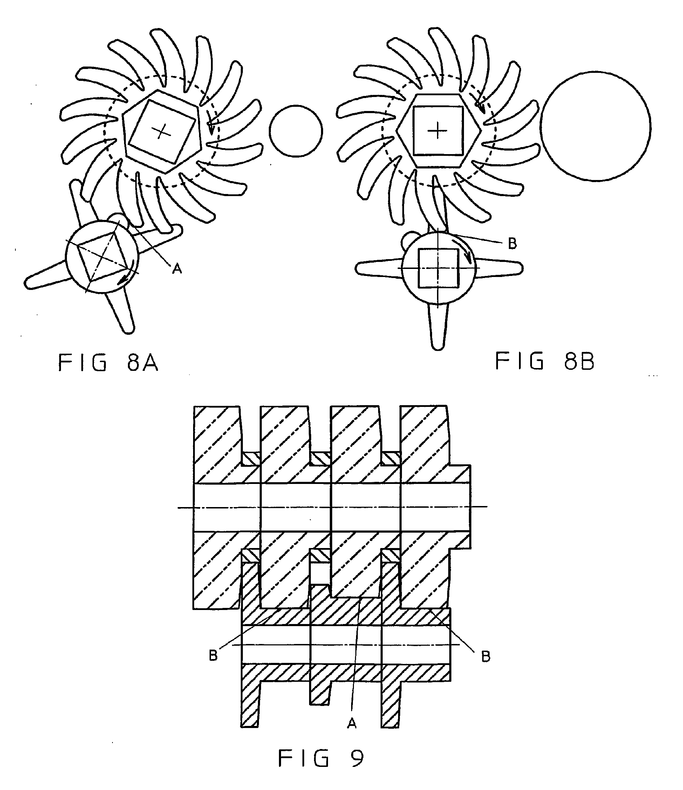

Figures 8a and 8b show an embodiment of the agricultural separator in which the rotatable members 3 and 4 are not arranged in the same horizontal plane. Instead, the rotatable member 4 is arranged below the rotatable member 3. The rotatable member 4 is not required to convey the crop to be separated and can thus be made much smaller. This allows space to be saved in the agricultural separator. The rotatable member 4 has a plurality of cam members 5 each having a roller 6 with which the fingers 2 of the wheels 1 of the rotatable member 3 may be engaged. In addition, fingers 2 are provided on the wheel 1 on the rotatable member 4; these fingers are engageable with the cam members 5 on the rotatable member, so that the cam members 5 can be cleaned. The cam members 5 on the rotatable member 3 do not have rollers 6, since they are not required to clean between the fingers 2 on the rotatable member 4 because these fingers 2 do not convey the crop. It will be appreciated that the cam members 5 on the rotatable member 3 can be removed. In this case, the wheel 1 with fingers 2 on the rotatable member 4 can be discarded.

The advantage of locating the rotatable member 4 below the rotatable member 3 is that the soil is discharged downwardly of the rotatable member 3, thus improving the discharge efficiency. Furthermore, since a plurality of wheels do not have to be overlapped horizontally, the conveying length of the separator can be reduced.

In a further embodiment, the separators of Figures 8a and 8b have a contra-rotating roller 12 arranged in the same horizontal plane as the rotatable member 3. This roller 12 further aids removal of unwanted material, since it provides a further surface against which the material rotates.

## Claims

1. An agricultural separator comprising a first rotatable member and a second rotatable member rotatable about substantially parallel spaced axes, the first rotatable member carrying a wheel with angularly-spaced resilient fingers, the second rotatable member carrying a cam member, wherein the cam member has at least one cam surface at its periphery and the rotatable members are arranged such that, in use, the cam surface on the cam member engages and squeezes at least one of the resilient fingers of the wheel to facilitate cleaning of the wheel.

2. An agricultural separator as claimed in claim 1 wherein the first rotatable member carries a plurality of wheels with angularly-spaced resilient fingers, and the second rotatable member carries a plurality of corresponding cam members.

3. An agricultural separator as claimed in claim 2, wherein a plurality of said cam members is arranged between the wheels on the first rotatable member.

4. An agricultural separator as claimed in claim 2 or 3, wherein a plurality of said wheels is arranged between the cam members on the second rotatable member.

5. An agricultural separator as claimed in any one of the preceding claims, wherein the cam surface is located on a detachable part of the cam member.

6. An agricultural separator as claimed in Claim 5, wherein the detachable part of the cam member is in the form of a wheel or roller.

7. An agricultural separator as claimed in any one ofthe preceding claims, wherein the rotatable members are rotatable at different speeds.

8. An agricultural separator as claimed in Claim 7, wherein the second rotatable member is rotatable at a higher speed than the first rotatable member.

9. An agricultural separator as claimed in Claim 7 or 8, wherein the difference in speed of the rotatable members is such that each finger of the wheel is squeezed by its respective cam member at least once per cycle.

10. An agricultural separator as claimed in any one ofthe preceding claims, wherein the cam member is made of a resilient material.

11. An agricultural separator as claimed in any one ofthe preceding claims, wherein the cam member is mounted on a boss.

12. An agricultural separator as claimed in Claim 11, wherein the boss cross-section normal to the axis of rotation has four or more sides.

13. An agricultural separator as claimed in Claim 12, wherein the boss cross-section normal to the axis of rotation is hexagonal.

14. An agricultural separator as claimed in any one of Claims 11 to 13, wherein the boss is formed as part of the at least one wheel.

15. An agricultural separator as claimed in any one ofthe preceding claims, wherein the fingers of the wheel are substantially straight.

16. An agricultural separator as claimed in any one of Claims 1 to 14, wherein the leading edge of the fingers of the wheel is convex or concave.

17. An agricultural separator as claimed in any one ofthe preceding claims, wherein the fingers are of different lengths.

18. An agricultural separator as claimed in Claim 17, wherein the fingers are alternately longer and shorter than one another.

19. An agricultural separator as claimed in any one of the preceding claims, wherein the cam member has more than one cam surface.

20. An agricultural separator as claimed in any one of the preceding claims, wherein the diam eter of the cam member is such that a gap is formed between the cam member and the wheel with which it is adapted to engage to permit passage of material therethrough.

21. An agricultural separator as claimed in any one of the preceding claims, wherein the first and second rotatable members are not arranged in the same horizontal plane.

## Patentansprüche

1. Landwirtschaftliche Trennvorrichtung, enthaltend ein erstes drehbares Element und ein zweites drehbares Element, die um im wesentlichen parallel beabstandete Achsen gedreht werden können, wobei das erste drehbare Element ein Rad mit winkelig beabstandeten elastischen Fingern trägt, das zweite drehbare Element ein Nockenelement trägt, wobei das Nockenelement über wenigstens eine Nockenoberfläche an seinem Rand verfügt und die drehbaren Elemente derart angeordnet sind, dass im Gebrauch die Nockenoberfläche auf dem Nockenelement wenigstens mit einem der elastischen Finger des Rades in Eingriff gelangt und diesen drückt, um eine Reinigung des Rades zu ermöglichen.

2. Landwirtschaftliche Trennvorrichtung nach Anspruch 1, bei der das erste drehbare Element eine Vielzahl von Rädern mit winkelig beabstandeten elastischen Fingern trägt und das zweite drehbare Element eine Vielzahl entsprechender Nockenelemente trägt.

3. Landwirtschaftliche Trennvorrichtung nach Anspruch 2, bei der eine Vielzahl der Nockenelemente zwischen den Rädern des ersten drehbaren Elementes angeordnet ist.

4. Landwirtschaftliche Trennvorrichtung nach Anspruch 2 oder 3, bei der eine Vielzahl der Räder zwischen den Nockenelementen und dem zweiten drehbaren Element angeordnet ist.

5. Landwirtschaftliche Trennvorrichtung nach einem der vorhergehenden Ansprüche, bei dem sich die Nockenoberfläche auf einem lösbaren Teil des Nockenelementes befindet.

6. Landwirtschaftliche Trennvorrichtung nach Anspruch 5, bei der der lösbare Teil des Nockenelementes die Form eines Rades oder einer Walze hat.

7. Landwirtschaftliche Trennvorrichtung nach einem der vorhergehenden Ansprüche, bei der die drehbaren Elemente mit unterschiedlichen Drehzahlen gedreht werden können.

8. Landwirtschaftliche Trennvorrichtung nach Anspruch 7, bei der das zweite drehbare Element mit einer höheren Drehzahl als die des ersten drehbaren Elementes gedreht werden kann.

9. Landwirtschaftliche Trennvorrichtung nach Anspruch 7 oder 8, bei der der Drehzahlunterschied der drehbaren Elemente so gestaltet ist, dass jeder Finger des Rades von seinem entsprechenden Nockenelement wenigstens einmal pro Umdrehung gedrückt wird.

10. Landwirtschaftliche Trennvorrichtung nach einem der vorhergehenden Ansprüche, bei der das Nockenelement aus einem elastischen Material besteht.

11. Landwirtschaftliche Trennvorrichtung nach einem der vorhergehenden Ansprüche, bei der das Nockenelement auf einer Nabe angebracht ist.

12. Landwirtschaftliche Trennvorrichtung nach Anspruch 11, bei der der Querschnitt der Nabe senkrecht zur Drehachse wenigstens vier Seiten aufweist.

13. Landwirtschaftliche Trennvorrichtung nach Anspruch 12, bei der der Querschnitt der Nabe senkrecht zur Drehachse sechseckig ist.

14. Landwirtschaftliche Trennvorrichtung nach einem der Ansprüche 11 bis 13, bei der die Nabe als Teil des wenigstens einen Rades ausgebildet ist.

15. Landwirtschaftliche Trennvorrichtung nach einem der vorangehenden Ansprüche, bei der die Finger des Rades im wesentlichen gerade sind.

16. Landwirtschaftliche Trennvorrichtung nach einem der Ansprüche 1 bis 14, bei der die Vorderkante der Finger des Rades konvex oder konkav ist.

17. Landwirtschaftliche Trennvorrichtung nach einem der vorhergehenden Ansprüche, bei der die Finger unterschiedliche Längen haben.

18. Landwirtschaftliche Trennvorrichtung nach Anspruch 17, bei der die Finger abwechselnd zueinander länger und kürzer sind.

19. Landwirtschaftliche Trennvorrichtung nach einem der vorhergehenden Ansprüche, bei der das Nockenelement wenigstens eine Nockenoberfläche hat.

20. Landwirtschaftliche Trennvorrichtung nach einem der vorhergehenden Ansprüche, bei der der Durchmesser des Nockenelementes derart gestaltet ist, dass ein Spalt zwischen dem Nockenelement und dem Rad ausgebildet ist, mit dem es in Eingriff gelangen kann, um einen Materialdurchgang durch diesen zu ermöglichen.

21. Landwirtschaftliche Trennvorrichtung nach einem der vorhergehenden Ansprüche, bei der das erste und das zweite drehbare Element nicht in derselben horizontalen Ebene angeordnet sind.

## Revendications

1. Séparateur agricole comprenant un premier élément rotatif et un second élément rotatif pouvant tourner autour d'axes espacés de manière sensiblement parallèles, le premier élément rotatif supportant une roue avec des doigts élastiques espacés de manière angulaire, le second élément rotatif supportant un élément de came, dans lequel l'élément de came a au moins une surface de came au niveau de sa périphérie et les éléments rotatifs sont agencés de sorte qu'à l'usage, la surface de came sur l'élément de came met en prise et comprime au moins l'un des doigts élastiques de la roue pour faciliter le nettoyage de la roue.

2. Séparateur agricole selon la revendication 1, dans lequel le premier élément rotatif supporte une pluralité de roues avec des doigts élastiques espacés de manière angulaire, et le second élément rotatif supporte une pluralité d'éléments de came correspondant.

3. Séparateur agricole selon la revendication 2, dans lequel une pluralité desdits éléments de came est agencée entre les roues sur le premier élément rotatif.

4. Séparateur agricole selon la revendication 2 ou 3, dans lequel une pluralité desdites roues est agencée entre les éléments de came sur le second élément rotatif.

5. Séparateur agricole selon l'une quelconque des revendications précédentes, dans lequel la surface de came est positionnée sur une partie détachable de l'élément de came.

6. Séparateur agricole selon la revendication 5, dans lequel la partie détachable de l'élément de came se présente sous la forme d'une roue ou d'un rouleau.

7. Séparateur agricole selon l'une quelconque des revendications précédentes, dans lequel les éléments rotatifs peuvent tourner à des vitesses différentes.

8. Séparateur agricole selon la revendication 7, dans lequel le second élément rotatif peut tourner à une vitesse supérieure au premier élément rotatif.

9. Séparateur agricole selon la revendication 7 ou 8, dans lequel la différence de vitesse des éléments rotatifs est telle que chaque doigt de la roue est comprimée par son élément de came respectif au moins une fois par cycle.

10. Séparateur agricole selon l'une quelconque des revendications précédentes, dans lequel l'élément de came est réalisé avec un matériau élastique.

11. Séparateur agricole selon l'une quelconque des revendications précédentes, dans lequel l'élément de came est monté sur un bossage.

12. Séparateur agricole selon la revendication 11, dans lequel la section transversale de bossage normale par rapport à l'axe de rotation a quatre côtés ou plus.

13. Séparateur agricole selon la revendication 12, dans lequel la section transversale de bossage normale par rapport à l'axe de rotation est hexagonale.

14. Séparateur agricole selon l'une quelconque des revendications 11 à 13, dans lequel le bossage est formé comme une partie de la au moins une roue.

15. Séparateur agricole selon l'une quelconque des revendications précédentes, dans lequel les doigts de la roue sont sensiblement droits.

16. Séparateur agricole selon l'une quelconque des revendications 1 à 14, dans lequel le bord d'attaque des doigts de la roue est convexe ou concave.

17. Séparateur agricole selon l'une quelconque des revendications précédentes, dans lequel les doigts sont de longueurs différentes.

18. Séparateur agricole selon la revendication 17, dans lequel les doigts sont plus longs et plus courts de manière alternée les uns par rapport aux autres.

19. Séparateur agricole selon l'une quelconque des revendications précédentes, dans lequel l'élément de came a plus d'une surface de came.

20. Séparateur agricole selon l'une quelconque des revendications précédentes, dans lequel le diamètre de l'élément de came est tel qu'un espace est formé entre l'élément de came et la roue avec laquelle il est adapté à se mettre en prise pour permettre le passage du matériau à travers celle-ci.

21. Séparateur agricole selon l'une quelconque des revendications précédentes, dans lequel les premier et second éléments rotatifs ne sont pas agencés dans le même plan horizontal.
